# EUROPEAN PATENT SPECIFICATION

(11) **EP 3 782 743 B1**
(45) Date of publication and mention of the grant of the patent: **13.09.2023**
(21) Application number: 19865252.1
(22) Date of filing: 27.09.2019
(51) Int. Cl.: B08B 9/093, B08B 9/08, B08B 9/34, B08B 5/02, B08B 9/30, B08B 9/28, B08B 9/42

(54) **APPARATUS FOR REMOVING FOREIGN SUBSTANCE IN CONTAINER**
VORRICHTUNG ZUM ENTFERNEN VON FREMDSTOFFEN IN EINEM BEHÄLTER
APPAREIL POUR L'ÉLIMINATION D'UNE SUBSTANCE ÉTRANGÈRE DANS UN RÉCIPIENT

(30) Priority: 27.09.2018 KR 20180114898
(43) Date of publication of application: 24.02.2021
(73) Proprietor: LG Energy Solution, Ltd., Seoul 07335 (KR)
(72) Inventor: KIM, Jun Soo, Daejeon 34122 (KR); SONG, Young Soo, Daejeon 34122 (KR); PARK, Chun Hong, Daejeon 34122 (KR); IM, Ye Hoon, Daejeon 34122 (KR); HWANG, Sung Tae, Daejeon 34122 (KR)
(74) Representative: Hoffmann Eitle
(86) International application number: PCT/KR2019/012633
(87) International publication number: WO 2020/067796

(56) References cited:
- EP-A1- 2 772 447
- WO-A1-2018/123998
- JP-A- 2002 292 351
- JP-A- 2005 000 859
- JP-A- 2005 040 672
- JP-A- 2005 040 672
- JP-A- 2014 083 779
- KR-A- 20100 013 678

## Description

### [Technical Field]

The present invention relates to an apparatus for removing foreign substances in a container, and particularly, to an apparatus for removing foreign substances by inputting a gas into a container while conveying the container in order to remove foreign substances in the container.

### [Background Art]

In general, a method of removing foreign substances by inputting a gas into a cylindrical container from a blower nozzle has been used to remove foreign substances in the container.

The cylindrical container is conveyed by a conveying device, and a strong flow of the gas is inputted into the container when an opening portion of the container passes above blower nozzles installed along a conveyance path of the container, such that foreign substances attached to the inner wall of the container may be discharged to the outside.

However, if the blower nozzles are disposed along a center line of the container to be conveyed, there is a problem in that a flow of the gas inputted into the container and a flow of the gas discharged from the container collide with each other, which causes the stagnation of the gas flow and the deterioration in performance of removing foreign substances.

Document JP 2005 040672 A discloses an apparatus for removing foreign substances in a container, the apparatus comprising a conveying device configured to convey a container and to input gas flow into the container through a first nozzle configured to eject a gas toward an opening portion of the container, and further nozzles spaced apart from the first nozzle on opposite sides of the conveyor, configured to eject a gas toward an outer surface of the container.

### [Detailed Description of the Invention]

### [Technical Problem]

An apparatus for removing foreign substances in a container according to the present invention has been made to solve the above-mentioned problems and effectively remove foreign substances in a container by changing an arrangement of nozzles and reducing stagnation of a gas flow in the container.

### [Technical Solution]

An apparatus for removing foreign substances in a container according to an exemplary embodiment of the present invention is defined in claim 1 and includes: a conveying device configured to convey a container having an opening portion, and to input gas flow into the container through nozzles, and a first nozzle configured to eject a gas toward the opening portion of the container, in which the first nozzle is disposed to be spaced, toward one side, at a first spacing distance, apart from an imaginary vertical surface that runs through a center of the container and extends in a conveyance direction in which the container is conveyed. The apparatus further comprises a second nozzle configured to eject a gas toward the opening portion of the container and disposed to be spaced apart from the first nozzle in the conveyance direction in which the container is conveyed, wherein the second nozzle is disposed to be spaced, toward the other side, at a second spacing distance, apart from the imaginary vertical surface.

### [Advantageous Effects]

According to the apparatus for removing foreign substances in a container according to the present invention, the nozzles are disposed to be spaced, at predetermined intervals, apart from a center line of the container to be conveyed, and thus the stagnation of the flow of the gas to be inputted into the container is reduced, thereby effectively removing foreign substances in the container.

### [Brief Description of Drawings]

FIG. 1 is a view illustrating an apparatus for removing foreign substances in a container according to an exemplary embodiment of the present invention.
FIG. 2 is a view illustrating a state in which a container and nozzles of the apparatus for removing foreign substances in a container according to the exemplary embodiment of the present invention are disposed.
FIG. 3 is a view illustrating results of analyzing an average flow velocity in the container and average shear stress of an inner wall of the container in accordance with a comparative example and the exemplary embodiment of the present invention.
FIG. 4 is a view illustrating results of analyzing a gas flow in the container in accordance with the comparative example and the exemplary embodiment of the present invention.
FIG. 5 is a view illustrating a state in which nozzles of an apparatus for removing foreign substances in a container according to another exemplary embodiment of the present invention are disposed.
FIG. 6 is a view illustrating multiple nozzle sets according to FIG. 5.

### <Explanation of Reference Signs>

1: Apparatus for removing foreign substances in container
10: Conveying device
20: Nozzle set
21: First nozzle
22: Second nozzle

### [Mode For Invention]

The apparatus for removing foreign substances in a container according to the present invention includes a conveying device configured to convey a container having an opening portion, and a first nozzle configured to eject a gas toward the opening portion of the container, in which the first nozzle is disposed to be spaced, toward one side, at a first spacing distance, apart from an imaginary vertical surface that runs through a center of the container and extends in a conveyance direction in which the container is conveyed.

The apparatus further includes a second nozzle configured to eject a gas toward the opening portion of the container and disposed to be spaced apart from the first nozzle in the conveyance direction in which the container is conveyed, in which the second nozzle is disposed to be spaced, toward the other side, at a second spacing distance, apart from the imaginary vertical surface.

In the present embodiment, the opening portion of the container may be disposed to be directed downward, and the first nozzle may be disposed below the container and eject the gas toward the opening portion of the container.

In the present embodiment, the container may have a cylindrical shape, and at least one of the first spacing distance and the second spacing distance may be 4/5 of a radius of the container.

In the present embodiment, the first spacing distance and the second spacing distance may be equal to each other.

In the present embodiment, a diameter of the first nozzle may be smaller than the first spacing distance, and a diameter of the second nozzle may be smaller than the second spacing distance.

In the present embodiment, the conveying device may include a support member configured to auxiliarily support a coupled state between the conveying device and the container in order to prevent the container from being separated from the conveying device by a pressure of the gas ejected from the first nozzle.

In the present embodiment, the first nozzle and the second nozzle may be configured as one nozzle set, and multiple nozzle sets may be disposed in the conveyance direction.

In another embodiment of the present invention, the nozzle sets may include a first set and a second set, the first spacing distance of the first nozzle of the first set and the second spacing distance of the second nozzle of the first set may be different from each other, the first spacing distance of the first nozzle of the second set may be equal to the second spacing distance of the second nozzle of the first set, and the second spacing distance of the second nozzle of the second set may be equal to the first spacing distance of the first nozzle of the first set.

The present invention will be apparent with reference to exemplary embodiments to be described below in detail together with the accompanying drawings. However, the present invention is not limited to the exemplary embodiments disclosed herein but will be implemented in various forms. The exemplary embodiments of the present invention are provided so that the present invention is completely disclosed, and a person with ordinary skill in the art can fully understand the scope of the present invention. The present invention will be defined only by the scope of the appended claims. Meanwhile, the terms used in the present specification are for explaining the exemplary embodiments, not for limiting the present invention. Unless particularly stated otherwise in the present specification, a singular form also includes a plural form. The terms such as "comprises (includes)" and/or "comprising (including)" used in the specification do not exclude presence or addition of one or more other constituent elements, steps, operations, and/or elements, in addition to the mentioned constituent elements, steps, operations, and/or elements. The terms such as "first" and "second" may be used to describe various constituent elements, but the constituent elements should not be limited by the terms. These terms are used only to distinguish one constituent element from another constituent element.

Hereinafter, specific exemplary embodiments of the present invention will be described in detail with reference to the accompanying drawings.

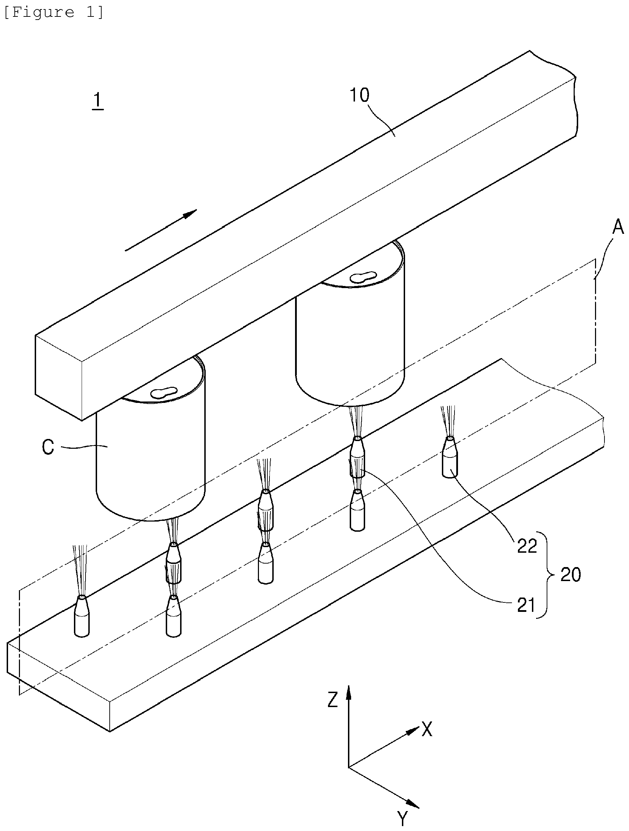

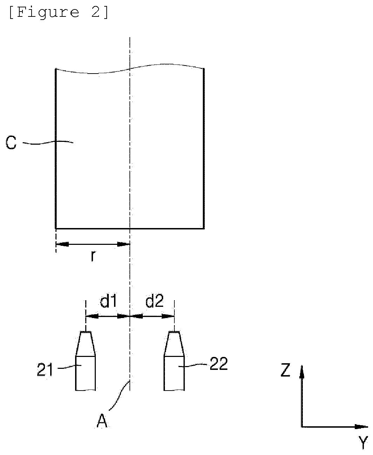

FIG. 1 is a view illustrating an apparatus 1 for removing foreign substances in a container according to an exemplary embodiment of the present invention. FIG. 2 is a view illustrating a state in which a container and nozzles of the apparatus 1 for removing foreign substances in a container according to the exemplary embodiment of the present invention are disposed.

Referring to FIGS. 1 and 2, the present invention relates to the apparatus 1 for removing foreign substances in a container, which is configured to remove foreign substances in a container C with a pressure of a gas by inputting the gas into the container C while conveying the container C. For ease of description, the apparatus 1 will be described below on the assumption that the container has a cylindrical shape which is 17.7 mm in outer diameter, 17 mm in inner diameter (2*r), and 68.4 mm in height and the container has an opening portion opened at one end thereof.

The apparatus 1 for removing foreign substances in a container includes a conveying device 10, a first nozzle 21, and a second nozzle 22.

The conveying device 10 is a device configured to convey the container. The conveying device 10 may convey the container with the opening portion directed downward. In order to prevent the container from being separated from the conveying device 10 by a pressure of a gas ejected from the first nozzle 21, the conveying device 10 may include a support member (not illustrated) configured to auxiliarily support the coupled state between the conveying device 10 and the container. For example, the container is picked up by a clamp (not illustrated) and coupled to the conveying device, and the support member having a frame shape corresponding to an outer diameter of the container is provided around a part where the container is coupled, thereby preventing the container from swaying or being separated.

The first nozzle 21 is a nozzle configured to eject the gas toward the opening portion of the container. A flow velocity of the gas measured at an end of the first nozzle 21 may be 50 m/s. The first nozzle 21 may be disposed below the container in order to eject the gas into the container conveyed with the opening portion directed downward.

The first nozzle 21 extends in a conveyance direction and is disposed to be spaced apart from an imaginary vertical surface A, that runs through a center of the container, at a first spacing distance d1 toward one side. The first spacing distance d1 is a distance from the imaginary vertical surface A to a center of the nozzle having a circular end. For example, the first spacing distance d1 may be 6.8 mm.

If the center of the nozzle (not illustrated) is placed in a movement path of the center of the container, a gas flow stagnates in the container when the container is moving, such that there may be a section from which the foreign substances are not removed. For example, the time required for the container to pass a section in which the nozzle is positioned may be approximately 2.77 seconds. In this case, the gas flow may stagnate in the container for about 1 second. In the present invention, the first nozzle 21 may be disposed to be spaced, toward one side, by 6.8 mm, apart from the imaginary vertical surface A provided on the movement path of the center of the container, such that the time required for the container to pass the nozzle is 1.77 seconds.

The second nozzle 22 is a nozzle configured to eject a gas toward the opening portion of the container. The second nozzle 22 is disposed to be spaced apart from the first nozzle 21 in the conveyance direction in which the container is conveyed. The second nozzle 22 is spaced apart from the imaginary vertical surface A toward the other side at a second spacing distance d2. For example, the second spacing distance may be 6.8 mm. The second nozzle 22 may be disposed below the container in order to eject the gas into the container conveyed with the opening portion directed downward.

At least one of the first spacing distance d1 and the second spacing distance d2 may be 4/5 of a radius (r) of the container. Therefore, gas flows may be formed so that the path of the gas inputted into the container and the path of the gas discharged from the container do not overlap each other. In addition, the first spacing distance d1 and the second spacing distance d2 may be equal to each other.

A diameter of the first nozzle 21 may be smaller than the first spacing distance d1, and a diameter of the second nozzle 22 may be smaller than the second spacing distance d2. As an example, when each of the first spacing distance d1 and the second spacing distance d2 are 6.8 mm, the diameter of each of the first nozzle 21 and the second nozzle 22 may be 3.2 mm.

The first nozzle 21 and the second nozzle 22 are configured as one nozzle set 20, and the multiple nozzle sets are disposed in the conveyance direction. As an example, three nozzle sets 20 may be provided. In the present exemplary embodiment, it was proven that 60.0% of foreign substances was removed when the single nozzle set 20 was provided, and 91.3% of foreign substances was removed when the three nozzle sets 20 were provided.

Hereinafter, experimental results of numerical analyses for the apparatus 1 for removing foreign substances in a container according to the exemplary embodiment of the present invention will be described.

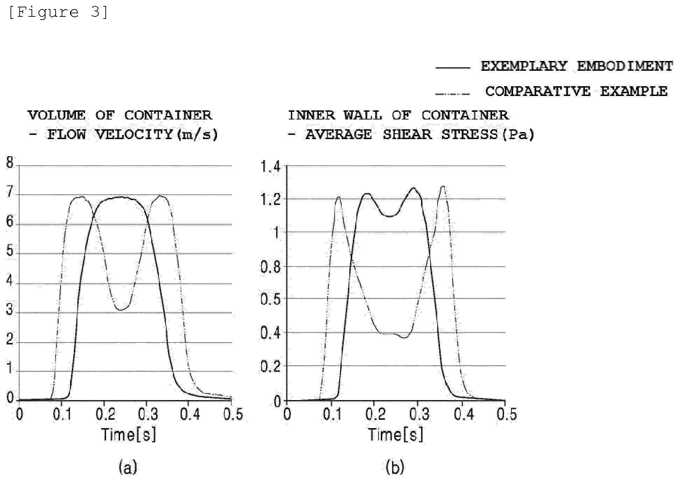

FIG. 3 is a view illustrating results of analyzing an average flow velocity in the container and average shear stress of an inner wall of the container in accordance with a comparative example and the exemplary embodiment of the present invention. Specifically, FIG. 3 may be a view illustrating experimental results made when the conveying device 10 conveys the container at a constant velocity and inputs the gas flow into the container through the nozzles.

Referring to FIG. 3, the comparative example of the present invention is configured such that the multiple nozzles are disposed on the same line as the imaginary vertical surface A that runs through the center of the container conveyed. It can be seen that the average flow velocity to the volume of the apparatus 1 for removing foreign substances in a container according to the comparative example increases up to approximately 7 m/s as the container enters the section in which the nozzles are disposed, and the average flow velocity decreases within a time section from 0.2 sec to 0.3 sec in which the nozzle passes the section adjacent to the center of the container, and then decreases to approximately 3 m/s. It can be ascertained that this situation is caused because the flow of the gas inputted into the container collides with the flow of the gas discharged from the container and thus the flow of the gas stagnates.

In contrast, it can be seen that according to the apparatus 1 for removing foreign substances in a container according to the exemplary embodiment of the present invention, the average flow velocity to the volume is maintained as 7 m/s even within the time section from 0.2 sec to 0.3 sec. Therefore, it can be seen that the stagnation of the gas flow in the container is reduced (see (a) of FIG. 3) in the present exemplary embodiment.

Further, referring to (b) of FIG. 3, it can be seen that there is a section in which the average shear stress of the inner wall of the container is reduced to 0.4 Pa within the time section from 0.2 sec to 0.3 sec in the comparative example. It can be seen that this situation is caused by the stagnation of the gas flow in the container and the effect of removing foreign substances attached to the inner wall of the container is reduced due to the reduction in shear stress applied to the inner wall of the container.

In contrast, it can be seen that the shear stress of the inner wall of the container is maintained as 1 Pa or more in the exemplary embodiment. Therefore, it can be seen that the foreign substances attached to the inner wall of the container are easily removed.

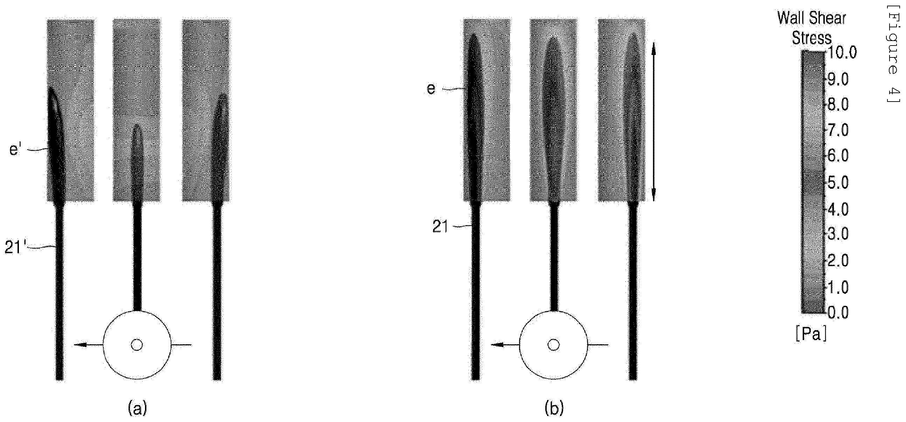

FIG. 4 is a view illustrating results of analyzing the gas flow in the container in accordance with the comparative example and the exemplary embodiment of the present invention.

(a) of FIG. 4 is a view illustrating a change in shape e' of a gas flow having a constant velocity with respect to a relative position between the container and the nozzle when the gas is inputted to the conveyed container from the nozzle disposed on the conveyance path that runs through the center of the container in the comparative example. (b) of FIG. 4 is a view illustrating a shape e of a gas flow having a constant velocity with respect to a relative position between the container and the nozzle when the gas is inputted to the conveyed container from the nozzle disposed to be spaced, toward one side, apart from the conveyance path that runs through the center of the container in the exemplary embodiment of the present invention.

In the comparative example, the shape e' of a flow of a gas, which extends from an end of a nozzle 21' and is inputted into a container C, may represent a portion where a flow velocity is 15 m/s, and it can be seen that the greater the size of the shape of the flow of the gas, the smoother the circulation of the gas flow in the container and the higher the flow velocity. It can be seen that the size of the shape of the gas flow is decreased when the nozzle 21' passes through an inner center section of the container, and in this case, the circulation of the gas flow is not smooth and the flow velocity in the container is decreased. In contrast, in the exemplary embodiment, it can be seen that the size of the shape e of a gas flow is not decreased but maintained, and there is no great difference in shear stress between the section in which the nozzle is disposed to be spaced apart from the center of the container and the section in which the nozzle is disposed to be adjacent to the center of the container.

Hereinafter, an apparatus 1 for removing foreign substances in a container according to another exemplary embodiment of the present invention will be described.

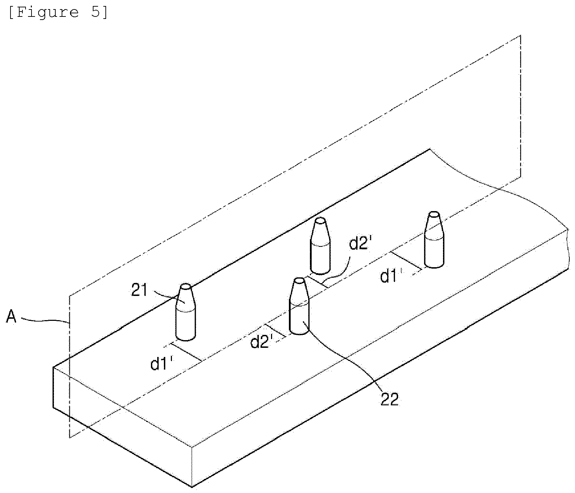

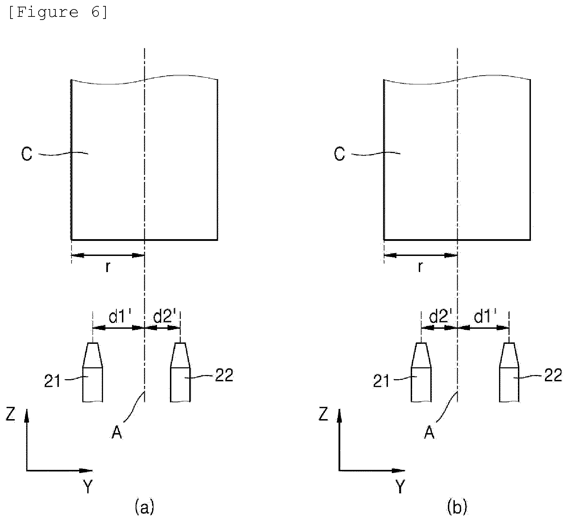

FIG. 5 is a view illustrating a state in which nozzles of the apparatus 1 for removing foreign substances in a container according to another exemplary embodiment of the present invention are disposed. FIG. 6 is a view illustrating multiple nozzle sets 20 according to another exemplary embodiment of the present invention.

Referring to FIGS. 5 and 6, the apparatus 1 for removing foreign substances in a container according to another exemplary embodiment of the present invention may include the multiple nozzle sets 20. As an example, the nozzle set 20 may include a first set and a second set.

A first spacing distance d1' of the first nozzle 21 of the first set and a second spacing distance d2' of the second nozzle 22 of the first set may be different from each other, the first spacing distance d1' of the first nozzle 21 of the second set and the second spacing distance d1' of the second nozzle 22 of the first set may be equal to each other, and the second spacing distance d2' of the second nozzle 22 of the second set and the first spacing distance d2' of the first nozzle 21 of the first set may be equal to each other.

Therefore, the positions of the nozzles are diversified, the inflow paths of the gas to be inputted into the container are diversified, and the gas is supplied to all positions in the container, such that the effect of removing foreign substances may be improved.

According to the apparatus 1 for removing foreign substances in a container according to the present invention, the nozzles are disposed to be spaced, at predetermined intervals, apart from the imaginary vertical surface A that runs through the center line of the container to be conveyed, and thus the stagnation of the flow of the gas to be inputted into the container C is reduced, thereby effectively removing foreign substances in the container.

The exemplary embodiments of the present disclosure are provided for illustrative purposes only but not intended to limit the technical concept of the present disclosure. The scope of the technical concept of the present disclosure is not limited thereto. The protective scope of the present disclosure should be construed based on the following claims.

## Claims

1. An apparatus (1) for removing foreign substances in a container, the apparatus (1) comprising:
a conveying device (10) configured to convey a container (C) having an opening portion, and to input gas flow into the container (C) through nozzles (21,22); and
a first nozzle (21) configured to eject a gas toward the opening portion of the container (C),
wherein the first nozzle (21) is disposed to be spaced, toward one side, at a first spacing distance (d1), apart from an imaginary vertical surface (A) that runs through a center of the container (C) and extends in a conveyance direction in which the container (C) is conveyed,
the apparatus further comprising:
a second nozzle (22) configured to eject a gas toward the opening portion of the container (C) and disposed to be spaced apart from the first nozzle (21) in the conveyance direction in which the container (C) is conveyed, wherein the second nozzle (22) is disposed to be spaced, toward the other side, at a second spacing distance (d2), apart from the imaginary vertical surface (A).

2. The apparatus (1) of claim 1, wherein the opening portion of the container (C) is disposed to be directed downward, and the first nozzle (21) is disposed below the container (C) and ejects the gas toward the opening portion of the container (C).

3. The apparatus (1) of claim 1, wherein the container (C) has a cylindrical shape, and at least one of the first spacing distance (d1) and the second spacing distance (d2) is 4/5 of a radius of the container (C).

4. The apparatus (1) of claim 1, wherein the first spacing distance (d1) and the second spacing distance (d2) are equal to each other.

5. The apparatus (1) of claim 1, wherein a diameter of the first nozzle (21) is smaller than the first spacing distance (d1), and a diameter of the second nozzle (22) is smaller than the second spacing distance (d2).

6. The apparatus (1) of claim 1, wherein the conveying device (10) comprises a support member configured to auxiliarily support a coupled state between the conveying device (10) and the container (C) in order to prevent the container (C) from being separated from the conveying device (10) by a pressure of the gas ejected from the first nozzle (21).

7. The apparatus (1) of claim 1, wherein the first nozzle (21) and the second nozzle (22) are configured as one nozzle set (20), and multiple nozzle sets (20) are disposed in the conveyance direction.

8. The apparatus (1) of claim 7, wherein the nozzle sets (20) comprise a first set and a second set, the first spacing distance (d1) of the first nozzle (21) of the first set and the second spacing distance (d2) of the second nozzle (22) of the first set are different from each other, the first spacing distance (d1) of the first nozzle (21) of the second set is equal to the second spacing distance (d2) of the second nozzle (22) of the first set, and the second spacing distance (d2) of the second nozzle (22) of the second set is equal to the first spacing distance (d1) of the first nozzle (21) of the first set.

## Patentansprüche

1. Einrichtung (1) zum Entfernen von Fremdstoffen in einem Behälter, wobei die Einrichtung (1) umfasst:
eine Beförderungsvorrichtung (10), die dazu konfiguriert ist, einen Behälter (C), der einen Öffnungsabschnitt aufweist, zu befördern und einen Gasstrom durch Düsen (21, 22) in den Behälter (C) einzuleiten; und
eine erste Düse (21), die dazu konfiguriert ist, ein Gas in Richtung des Öffnungsabschnitts des Behälters (C) auszustoßen,
wobei die erste Düse (21) dazu angeordnet ist, in Richtung einer Seite in einem ersten Beabstandungsabstand (d1) von einer imaginären vertikalen Oberfläche (A) beabstandet zu sein, die durch eine Mitte des Behälters (C) verläuft und sich in einer Beförderungsrichtung erstreckt, in welcher der Behälter (C) befördert wird, wobei die Einrichtung weiter umfasst:
eine zweite Düse (22), die dazu konfiguriert ist, ein Gas in Richtung des Öffnungsabschnitts des Behälters (C) auszustoßen, und die dazu angeordnet ist, in der Beförderungsrichtung, in welcher der Behälter (C) befördert wird, von der ersten Düse (21) beabstandet zu sein, wobei die zweite Düse (22) dazu angeordnet ist, in Richtung der anderen Seite in einem zweiten Beabstandungsabstand (d2) von der imaginären vertikalen Oberfläche (A) beabstandet zu sein.

2. Einrichtung (1) nach Anspruch 1, wobei der Öffnungsabschnitt des Behälters (C) dazu angeordnet ist, nach unten gerichtet zu sein, und die erste Düse (21) unterhalb des Behälters (C) angeordnet ist und das Gas in Richtung des Öffnungsabschnitts des Behälters (C) ausstößt.

3. Einrichtung (1) nach Anspruch 1, wobei der Behälter (C) eine zylindrische Form aufweist und mindestens einer von dem ersten Beabstandungsabstand (d1) und dem zweiten Beabstandungsabstand (d2) 4/5 eines Radius des Behälters (C) beträgt.

4. Einrichtung (1) nach Anspruch 1, wobei der erste Beabstandungsabstand (d1) und der zweite Beabstandungsabstand (d2) gleich zueinander sind.

5. Einrichtung (1) nach Anspruch 1, wobei ein Durchmesser der ersten Düse (21) kleiner ist als der erste Beabstandungsabstand (d1), und ein Durchmesser der zweiten Düse (22) kleiner ist als der zweite Beabstandungsabstand (d2).

6. Einrichtung (1) nach Anspruch 1, wobei die Beförderungsvorrichtung (10) ein Stützelement umfasst, das dazu konfiguriert ist, einen gekoppelten Zustand zwischen der Beförderungsvorrichtung (10) und dem Behälter (C) hilfsweise zu stützen, um zu verhindern, dass der Behälter (C) durch einen Druck des aus der ersten Düse (21) ausgestoßenen Gases von der Beförderungsvorrichtung (10) getrennt wird.

7. Einrichtung (1) nach Anspruch 1, wobei die erste Düse (21) und die zweite Düse (22) als ein Düsensatz (20) konfiguriert sind und mehrere Düsensätze (20) in der Beförderungsrichtung angeordnet sind.

8. Einrichtung (1) nach Anspruch 7, wobei die Düsensätze (20) einen ersten Satz und einen zweiten Satz umfassen, der erste Beabstandungsabstand (d1) der ersten Düse (21) des ersten Satzes und der zweite Beabstandungsabstand (d2) der zweiten Düse (22) des ersten Satzes voneinander verschieden sind, der erste Beabstandungsabstand (d1) der ersten Düse (21) des zweiten Satzes gleich dem zweiten Beabstandungsabstand (d2) der zweiten Düse (22) des ersten Satzes ist, und der zweite Beabstandungsabstand (d2) der zweiten Düse (22) des zweiten Satzes gleich dem ersten Beabstandungsabstand (d1) der ersten Düse (21) des ersten Satzes ist.

## Revendications

1. Appareil (1) pour éliminer des substances étrangères dans un récipient, l'appareil (1) comprenant :
un dispositif de transport (10) configuré pour transporter un récipient (C) présentant une portion d'ouverture, et pour faire entrer un écoulement de gaz dans le récipient (C) par l'intermédiaire de buses (21, 22) ; et
une première buse (21) configurée pour éjecter un gaz vers la portion d'ouverture du récipient (C),
dans lequel la première buse (21) est disposée pour être espacée, vers un côté, suivant une première distance d'espacement (d1), d'une surface verticale imaginaire (A) qui traverse un centre du récipient (C) et s'étend dans une direction de transport dans laquelle le récipient (C) est transporté, l'appareil comprenant en outre :
une seconde buse (22) configurée pour éjecter un gaz vers la portion d'ouverture du récipient (C) et disposée pour être espacée de la première buse (21) dans la direction de transport dans laquelle le récipient (C) est transporté, dans lequel la seconde buse (22) est disposée pour être espacée, vers l'autre côté, suivant une seconde distance d'espacement (d2), de la surface verticale imaginaire (A).

2. Appareil (1) selon la revendication 1, dans lequel la portion d'ouverture du récipient (C) est disposée pour être dirigée vers le bas, et la première buse (21) est disposée en dessous du récipient (C) et éjecte le gaz vers la portion d'ouverture du récipient (C).

3. Appareil (1) selon la revendication 1, dans lequel le récipient (C) présente une forme cylindrique, et au moins une de la première distance d'espacement (d1) et de la seconde distance d'espacement (d2) est égale à 4/5 d'un rayon du récipient (C).

4. Appareil (1) selon la revendication 1, dans lequel la première distance d'espacement (d1) et la seconde distance d'espacement (d2) sont égales l'une à l'autre.

5. Appareil (1) selon la revendication 1, dans lequel un diamètre de la première buse (21) est plus petit que la première distance d'espacement (d1), et un diamètre de la seconde buse (22) est plus petit que la seconde distance d'espacement (d2).

6. Appareil (1) selon la revendication 1, dans lequel le dispositif de transport (10) comprend un élément de support configuré pour supporter de manière auxiliaire un état accouplé entre le dispositif de transport (10) et le récipient (C) afin d'empêcher le récipient (C) d'être séparé du dispositif de transport (10) par une pression du gaz éjecté de la première buse (21).

7. Appareil (1) selon la revendication 1, dans lequel la première buse (21) et la seconde buse (22) sont configurées comme un ensemble de buses (20), et de multiples ensembles de buses (20) sont disposés dans la direction de transport.

8. Appareil (1) selon la revendication 7, dans lequel les ensembles de buses (20) comprennent un premier ensemble et un second ensemble, la première distance d'espacement (d1) de la première buse (21) du premier ensemble et la seconde distance d'espacement (d2) de la seconde buse (22) du premier ensemble sont différentes l'une de l'autre, la première distance d'espacement (d1) de la première buse (21) du second ensemble est égale à la seconde distance d'espacement (d2) de la seconde buse (22) du premier ensemble, et la seconde distance d'espacement (d2) de la seconde buse (22) du second ensemble est égale à la première distance d'espacement (d1) de la première buse (21) du premier ensemble.
